# DEMANDE DE BREVET EUROPEEN

(11) **EP 4 063 688 A1**
(43) Date de publication de la demande: **28.09.2022**
(21) Numéro de dépôt: 21164495.0
(22) Date de dépôt: 24.03.2021
(51) Int. Cl.: F16F 9/46

(54) **SOUPAPE ÉLECTROMAGNÉTIQUE, DISPOSITIF AMORTISSEUR SEMI-ACTIF ÉQUIPÉ D'UNE TELLE SOUPAPE ET PROCÉDÉ DE RÉGULATION D'UN TEL DISPOSITIF**

(71) Demandeur: Robert Bosch GmbH, 70442 Stuttgart (DE)
(72) Inventeur: BRUT, Romain, 69530 Orliénas (FR); PICAUD, Jérôme, 38230 Tignieu-Jameyzieu (FR)
(74) Mandataire: Cabinet HERRBURGER

(57) **Abrégé**

Soupape (1) comprenant : un corps de soupape (2), un piston principal (3) dans le corps (2), poussé en direction d'un siège (4) par un ressort (5) et traversé par un perçage (6), un piston de commande (47) mobile en translation dans le corps (2), entouré par une douille de guidage (8) et sollicité par un ressort (9) et un électroaimant (10) pour agir sur le piston de commande (7), ayant une forme de cylindre creux et une ouverture (11) chevauchant selon la position du piston (7) une rainure périphérique (12) de la douille (8) reliée à une chambre de pression (14) par un perçage (13).

## Description

### DOMAINE DE L'INVENTION

La présente invention se rapporte à une soupape électromagnétique pour la régulation d'un dispositif amortisseur semi-actif d'un véhicule.

L'invention se rapporte également à un dispositif amortisseur semi-actif de véhicule équipé d'une telle soupape électromagnétique ainsi qu'à un procédé de régulation d'un dispositif amortisseur semi-actif utilisant la soupape électromagnétique selon l'invention.

### ETAT DE LA TECHNIQUE

Selon le document DE 38 30 828 A1 on connaît un dispositif d'amortissement d'un système de suspension de roue par ressort, appliqué à des véhicules ; ce dispositif comporte un piston coulissant dans un cylindre et subdivisant celui-ci en deux chambres de travail. Le dispositif comprend en outre une installation de soupape pour influencer le débit du fluide comprimé d'une chambre de travail vers une autre chambre de travail. L'installation de soupape comprend une première et une seconde soupape d'étranglement ainsi que plusieurs clapets antiretour ; les branchements de toutes les soupapes d'étranglement et clapets antiretour, non tournés vers les branchements de la chambre de travail, sont réunis au moins de façon intermédiaire et les deux soupapes d'étranglement sont équipées chacune d'un tiroir de soupape. Une telle installation de soupape permet d'influencer l'amortissement du dispositif amortisseur et la première soupape d'étranglement on permet un amortissement de base et la seconde soupape d'étranglement réalise un amortissement supplémentaire. Les signaux de commande de l'amortissement de base signifient qu'il s'agit d'une adaptation lente d'un composant d'amortisseur, par exemple, pour influencer la tenue de route indépendamment des conditions de la route pendant que les signaux de commande pour l'amortissement supplémentaire, conservent un réglage plus rapide d'un autre composant d'amortissement, par exemple, les mouvements de la structure pour optimiser le confort en fonction de la vitesse absolue et des mouvements de soulèvement, d'inclinaison et de roulis. Globalement on obtient ainsi un effet d'amortissement semi-actif dans le système. Pour réaliser une installation peu encombrante et avantageuse, le document DE 38 30 828 A1 propose de loger les deux soupapes d'étranglement et les soupapes anti-rappel dans le piston. L'installation de soupape constitue ainsi le dispositif amortisseur.

### BUT DE L'INVENTION

Partant de cet état de la technique, la présente invention se propose de développer une installation de soupape pour un dispositif amortisseur semi-actif moins compliqué et de plus aussi universel que possible, c'est-à-dire qui comporte des dispositifs amortisseurs, différents, applicables.

### EXPOSE ET AVANTAGES DE L'INVENTION

A cet effet, l'invention a pour objet une soupape électromagnétique pour réguler un dispositif amortisseur semi-actif de véhicule comprenant un corps de soupape, un piston principal mobile en translation dans le corps de soupape, et poussé en direction du siège de soupape par la force d'un ressort et traversé par un perçage, un piston de commande mobile en translation dans le corps de soupape et entouré au moins par segment par une douille de guidage et sollicité par la force d'un ressort de commande ainsi qu'un électroaimant pour agir sur le piston de commande, ayant au moins par segment une forme de cylindre creux et sa paroi a au moins une ouverture mise en chevauchement avec une rainure périphérique de la douille de guidage en fonction de la position axiale du piston de commande et la rainure périphérique de la douille de guidage est reliée à une chambre de pression par au moins un perçage réalisé dans la douille de guidage, cette chambre étant en aval du perçage réalisé dans le piston principal.

La soupape électromagnétique telle que proposée est particulièrement compatible pour l'installation et peut s'utiliser dans cette forme, notamment comme soupape externe. Comme soupape externe, la soupape électromagnétique selon l'invention peut être combinée à de nombreux dispositifs amortisseurs, différents, ce qui étend les possibilités d'application.

Selon un développement de l'invention, la section d'ouverture d'au moins un orifice réalisé dans la paroi du piston de commande varie en fonction de la position axiale du piston de commande. Cela signifie que la section de l'ouverture augmente ou diminue en fonction de la position axiale du piston de commande. Cela permet de commander la pression dans la chambre de pression qui est en aval du perçage réalisé dans le piston principal. Une section minimale ou moyenne de l'ouverture est, de préférence, toujours libérée car il faut un passage à travers l'ouverture de la paroi du piston de commande pour réguler ou limiter la pression. En fonction de la position axiale du piston de commande, seule varie la taille de la section de l'ouverture.

Pour varier la section de l'ouverture, réalisée de préférence dans la paroi du piston de commande a une largeur qui varie dans la direction de mouvement du piston de commande, c'est-à-dire qu'elle devient plus étroite ou plus large. La largeur peut varier de façon continue ou par échelons de sorte que l'on réalise une variation non linéaire du passage à travers l'ouverture.

Lors de la variation de la section de l'ouverture, au moins un flan de la rainure périphérique de la douille de guidage coopère avec l'ouverture réalisée dans la paroi du piston de commande et cela sous la forme d'une arête de commande. En fonction de la position axiale du piston de commande par rapport à la rainure périphérique de la douille de guidage, la section libérée de l'ouverture sera petite ou grande.

La position axiale du piston de commande par rapport à la rainure périphérique de la douille de guidage dépend des efforts appliqués sur le piston de commande. Il s'agit principalement des forces de ressort et de la force magnétique développée par l'électroaimant car, de préférence, le piston de commande est équilibré en pression hydraulique. Cela signifie que les forces hydrauliques n'influence pas le piston de commande. En fonction de la force magnétique générée par l'électroaimant, le piston de commande peut être déplacé axialement contre la force du ressort de commande si bien que la section libre de l'ouverture et ainsi le débit à travers l'ouverture réalisée dans la paroi du piston de commande varie.

Selon une forme de réalisation préférentielle de l'invention, l'ouverture réalisée dans la paroi du piston de commande a une section pratiquement circulaire élargie par une fente s'étendant dans la direction axiale. L'ouverture a ainsi une forme analogue à celle d'un trou de serrure. La fente est, de préférence, orientée dans la direction du piston principal. Cela signifie qu'elle est située sur le côté de la partie circulaire de l'ouverture tournée vers le piston principal. De cette manière, lorsque l'électroaimant est alimenté au maximum, seule la partie de forme circulaire de l'ouverture sera partiellement ou totalement libérée. Ce n'est que lorsque le courant appliqué à l'électroaimant diminue que la fente sera également libérée.

En variante, le piston de commande comporte dans sa paroi non pas une seule ouverture en forme de trou de serrure, mais plusieurs ouvertures réparties en plusieurs rangées périphériques. La section d'ouverture correspond ainsi à la somme des sections des différentes ouvertures et en fonction de la position axiale du piston de commande, une ou plusieurs rangées d'ouverture pourront être libérées. La multiplicité des ouvertures permet la régulation précise de la section de l'ouverture et ainsi du débit. Il est simple de réaliser de nombreuses ouvertures, par exemple, à l'aide d'un laser. Cela permet de réaliser des ouvertures dont le diamètre se situe dans le domaine du micron. De façon préférentielle, le nombre d'ouvertures varie par rangées et de plus le nombre d'ouvertures par rangées diminue en direction du piston principal.

Comme déjà indiqué, la force du ressort de commande agit contre la force développée par l'électroaimant. En complément, la force du ressort de commande sollicite le piston de commande en direction d'une butée qui définit la position de fin de course du piston de commande. Dans cette position de fin de course, il subsiste au moins une ouverture ou au moins une zone partielle d'une ouverture du piston de commande qui reste ouverte. Cela est vrai indépendamment de ce qu'il y a une ou plusieurs ouvertures en forme de trou de serrure ou une multiplicité d'ouvertures réparties dans des rangées périphériques. Cela permet de réaliser une fonction sécurisée. En cas de défaut, c'est-à-dire d'électroaimant non alimenté, la force du ressort de commande maintient le piston de commande en butée de sorte qu'au moins une section d'ouverture minimale est assurée pour avoir un amortissement suffisant. La fonction sécurisée participe ainsi à une plus grande stabilité et plus grande sécurité du véhicule. La section d'ouverture qui reste libre en cas de défaillance est, de préférence, choisie pour obtenir une caractéristique moyenne d'amortissement. Cela garantit la sécurité du véhicule sans que cela ne soit aux prix d'une réduction importante du confort. En cas de défaillance, c'est-à-dire de défaillance de la soupape électromagnétique, la fonction de sécurité permet l'amortissement selon une caractéristique fixée au préalable.

Comme autre moyen, le piston de commande est sollicité indirectement par un organe d'appui et un autre ressort avec la force du ressort de commande. L'organe d'appui est logé, de préférence, de manière coulissante, dans le piston de commande et il s'appuie contre le piston de commande par l'autre ressort. En cas de coupure de courant, le piston de commande est poussé contre la butée par la force développée par les deux ressorts agissant en série (le ressort de commande et l'autre ressort). Cette solution a l'avantage que le passage de la fonction de sécurité en retour vers la fonction de régulation normale ne nécessite qu'une force magnétique réduite. Dans le cas de la position de secours, l'organe d'appui n'est plus en contact avec le piston de commande de sorte que la force pour déplacer le piston de commande dans la position de régulation est proportionnelle à la raideur équivalente des deux ressorts qui est proche de la raideur du ressort le plus faible. Dès que le piston arrive de nouveau en contact avec l'organe d'appui, seul le ressort de commande agit et sa raideur suffit pour une commande en finesse. Ce moyen tel que proposé selon un développement de l'invention permet ainsi d'optimiser la conception du circuit magnétique et aussi une réduction d'encombrement.

Selon une forme de réalisation préférentielle de l'invention, le siège du piston principal a un diamètre inférieur au diamètre du guidage du piston principal réalisé dans le corps de soupape. Cela se traduit par un rapport plus avantageux des surfaces actives, hydrauliques, développées sur le piston principal et ainsi une caractéristique d'ouverture plus avantageuse du piston principal.

La soupape électromagnétique telle que proposée fonctionne, de préférence, comme suit :
Dans une première phase ("phase de régulation"), l'alimentation d'un agent de pression génère une montée en pression devant et derrière le piston principal. La pression d'ouverture du piston principal est définie par le perçage réalisé dans le piston principal et par le passage à travers l'ouverture réalisée dans la paroi du piston de commande.

Dans une seconde phase ("phase de limitation de pression"), on atteint la pression d'ouverture du piston principal de sorte que celui-ci se soulève de son siège et s'ouvre contre la force du ressort du piston principal précontraint en direction du siège. Le piston principal libère une section d'ouverture qui produit la limitation de pression souhaitée.

Au passage de la phase de régulation à la phase de limitation de pression, la soupape électromagnétique selon l'invention se comporte -notamment par comparaison aux soupapes électromagnétiques de l'état de la technique- d'une manière particulièrement stable. Un autre avantage à mentionner est de réaliser une fonction de sécurité. Dans le cas du montage extérieur de la soupape électromagnétique par rapport au dispositif amortisseur, la soupape électromagnétique peut être combinée avec un grand nombre de dispositifs amortisseurs différents. Cela signifie qu'il faut moins de variantes, ce qui abaisse le coût.

Le dispositif amortisseur semi-actif proposé selon l'invention pour répondre au problème, pour un véhicule se caractérise en ce que ce dispositif comprend une soupape électromagnétique selon l'invention. La soupape électromagnétique est installée à l'extérieur du dispositif amortisseur. La soupape électromagnétique peut ainsi être combinée avec un grand nombre de dispositifs amortisseurs semi actifs, différents. La réalisation selon l'invention de la soupape électromagnétique permet en outre une forme très compacte ce qui réduit cet encombrement supplémentaire.

Pour résoudre le problème posé, il est en outre proposé un procédé de régulation d'un dispositif amortisseur semi-actif d'un véhicule pour lequel on utilise une soupape électromagnétique selon l'invention. Dans l'application du procédé, dans une première phase ("phase de régulation") seul le piston de commande est actionné. Lorsqu'on atteint la force d'ouverture du piston principal, dans une seconde phase suivante ("phase de limitation de pression"), le piston principal est activé. A l'aide de la soupape électromagnétique selon l'invention, on peut ainsi régler différentes caractéristiques d'amortissement du dispositif d'amortisseur semi-actif, ce qui se traduit par un compromis optimum entre les objectifs en soi opposés, de la sécurité de la conduite et du confort de conduite. En outre, la soupape électromagnétique, selon l'invention permet de réaliser une fonction de sécurité.

### BREVE DESCRIPTION DES DESSINS

La présente invention sera décrite ci-après de manière plus détaillée à l'aide de modes de réalisation d'une soupape électromagnétique selon l'invention représentée dans les dessins annexés dans lesquels :
[Fig. 1] vue en coupe longitudinale d'une soupape électromagnétique selon l'invention,
[Fig. 2a] détail agrandi de la figure 1 dans une première position de déplacement du piston de commande (alimentation maximum de l'électroaimant),
[Fig. 2b] détail agrandi de la figure 1 dans une première position de déplacement du piston de commande (alimentation maximum de l'électroaimant) tournée de 90°,
[Fig. 3a] détail agrandi de la figure 1 pour une seconde position de déplacement du piston de commande (alimentation réduite de l'électroaimant), {Fig. 3b] détail agrandi de la figure 1 pour une seconde position de déplacement du piston de commande (alimentation réduite de l'électroaimant), tournée de 90°,
[Fig. 4a] détail à échelle agrandie de la figure 1 d'une troisième position de déplacement du piston de commande (sans l'alimentation de l'électroaimant),
[Fig. 4b] détail à échelle agrandie de la figure 1 d'une troisième position de déplacement du piston de commande (sans l'alimentation de l'électroaimant), tournée de 90°,
[Fig. 5] vue à échelle agrandie d'un segment de paroi du piston de commande,
[Fig. 6] diagramme de la représentation graphique du comportement de roulage en fonction du débit à travers la soupape électromagnétique.

### DESCRIPTION DE MODES DE REALISATION

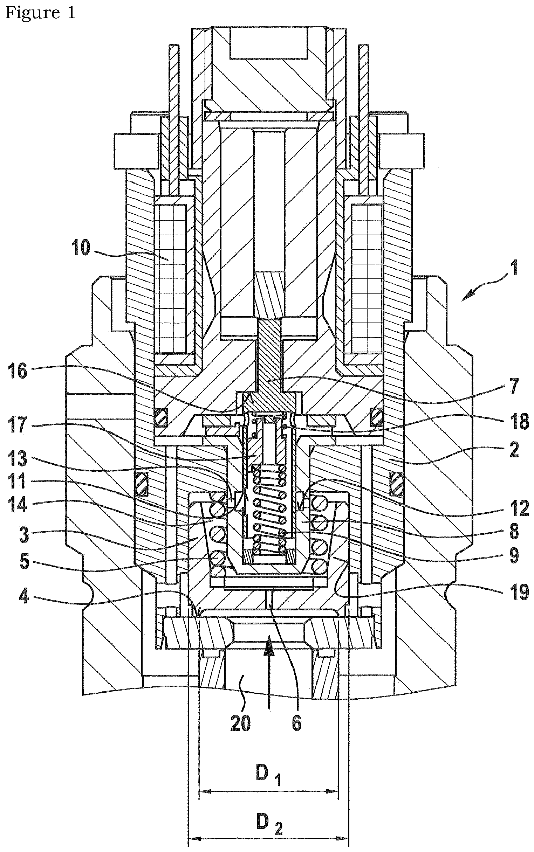

La soupape électromagnétique 1, selon l'invention, représentée à la figure 1, sert à réguler une installation d'amortissement semi-active (non représentée) d'un véhicule. Dans cette application, la soupape électromagnétique est utilisée comme soupape électromagnétique externe. Ainsi, cette solution peut être combinée avec un grand nombre de dispositifs amortisseurs différents.

La soupape électromagnétique 1 selon l'invention comprend un piston principal 3 logé dans un corps de soupape 2 et qui, sollicité, en direction de son siège 4 par la force d'un ressort 5 ; le piston est traversé par un perçage 6 qui relie une entrée 20 à une chambre de pression 14. Une douille de guidage 8 vient en saillie de la chambre de pression 14 ; cette douille sert au guidage du piston de commande 7. Le piston de commande 7 est précontraint par le ressort d'un ressort de commande 9 agissant en direction de l'électroaimant 10. Le ressort de commande 9 est appuyé d'un côté contre la douille de guidage 8 et de l'autre contre un organe d'appui 17 logé dans le piston de commande 7 et coulissant par rapport au piston de commande 7. L'organe d'appui 17 est lui-même appuyé par un autre ressort 18 contre le piston de commande 7 de sorte que la force du ressort de commande 9 n'agit qu'indirectement par l'organe d'appui 17 et le ressort 18 sur le piston de commande 7. Les deux ressorts 9 et 18 montés en série permettent de réduire la force magnétique nécessaire et de mettre le piston de commande 7 dans une position de régulation à partir d'une position de fin de course prédéfinie par une butée 16 et qui correspond à une position de sécurité.

La soupape électromagnétique 1 de la figure 1 est d'une construction particulièrement compacte de sorte que l'encombrement supplémentaire occasionné par le montage externe est faible.

Le piston de commande 7 de la soupape électromagnétique 1 représentée à la figure 1 est équilibré en pression hydraulique. Cela signifie que les forces hydrauliques n'influencent pas la position axiale du piston de commande 7. L'électroaimant 10 qui, ici, alimenté, fait varier le niveau de passage pour modifier la position axiale du piston de commande 7.

Pour déplacer le piston de commande 7 en direction du piston principal 3, il faut vaincre les forces de ressort appliquées contre le piston de commande 7. Pour cela, on sélectionne un premier niveau de courant ou un courant maximum appliqué à l'électroaimant 10. La force magnétique déplace alors le piston de commande 7 vers le bas, c'est-à-dire en direction du piston principal 3. La section ouverte dans l'ouverture 11 réalisée par le piston de commande 7 varie ainsi et la rainure périphérique réalisée dans la douille de guidage 8 ainsi que plusieurs perçages 13, radiaux sont en liaison avec la chambre de pression 14.

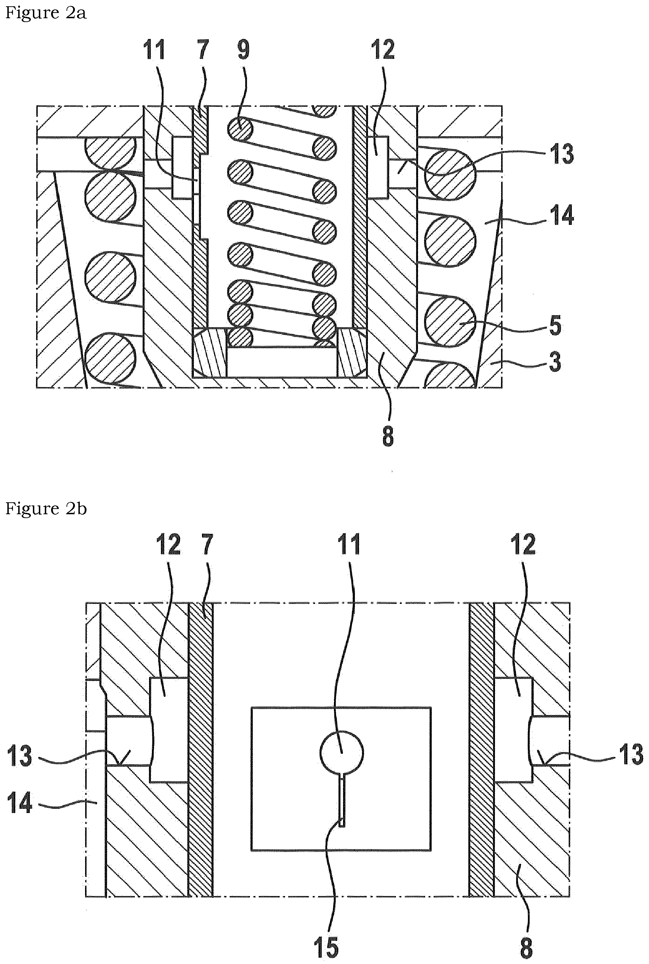

Selon la figure 1, l'ouverture 11 de la soupape électromagnétique 1 réalisée dans la paroi est un perçage de forme circulaire agrandie par une fente 15. La section de l'ouverture 11 varie ainsi en fonction de la position axiale du piston de commande 7 par rapport à la rainure périphérique 12 de la douille de guidage 8. Les figures 2-4 montrent des exemples de différentes sections d'ouverture et elles ne représentent pas toutes les sections d'ouverture possible car le piston de commande 7 peut varier de sa position axiale de façon quelconque, c'est-à-dire continue.

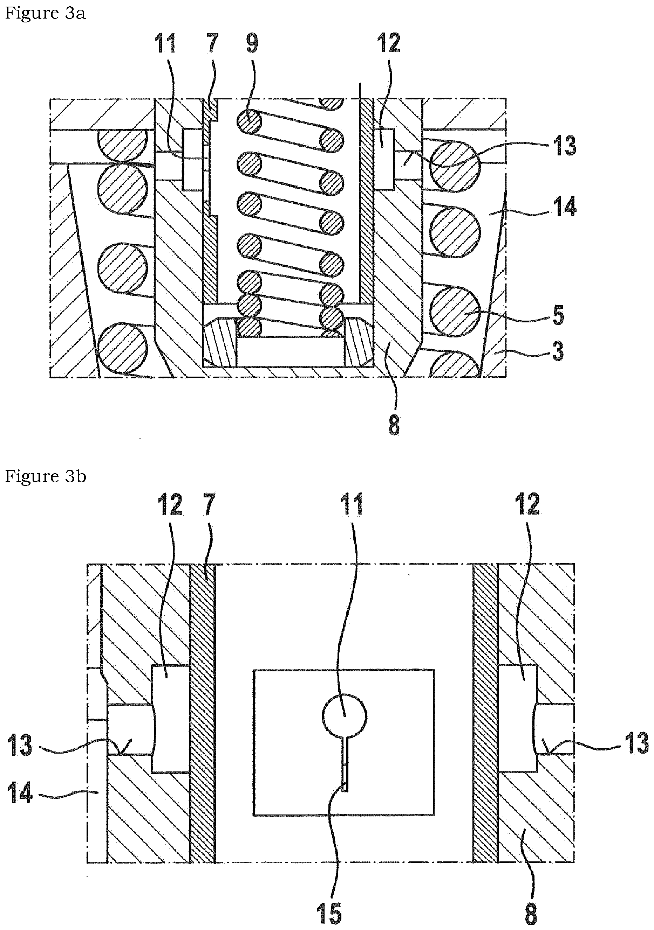

Les figures 2a et 2b montrent deux pistons de commande 7 avec une ouverture 11, par exemple, uniquement sa partie circulaire en position axiale, en concordance avec la rainure périphérique 12 de la douille de guidage 8. Le courant appliqué à l'électroaimant 10 est maximum dans cette position. Si l'on diminue le courant, le piston de commande 7 se déplace en direction de l'électroaimant 10 de sorte que comme présenté aux figures 3a et 3b, à titre d'exemple, tout d'abord une partie de la fente 15 chevauche la rainure périphérique 12. Le piston de commande 7 peut en outre prendre une position axiale dans laquelle la partie circulaire de l'ouverture 11 ainsi que l'ensemble de la fente 15 sont au niveau de la rainure périphérique 12. Dans cette position, la section de l'ouverture 11 est maximale et le courant appliqué à l'électroaimant 10 est minimum.

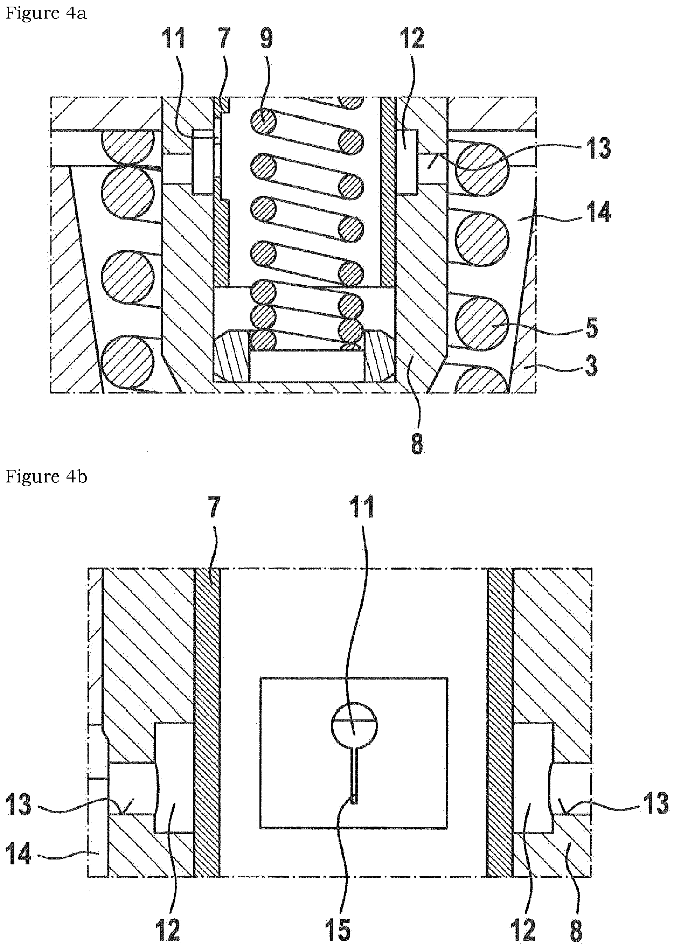

Comme représenté à titre d'exemple aux figures 4a et 4b, le piston de commande 7 peut en outre prendre une position dans laquelle la fente 15 est complètement libérée, mais la partie circulaire de l'ouverture 11 n'est libérée que partiellement de sorte que la section de l'ouverture correspond à une valeur moyenne. Cette position est, par exemple, celle du piston de commande 7 lorsque l'électroaimant 10 n'est pas alimenté, c'est-à-dire en cas de défaillance. Le piston de commande 7 est alors appliqué contre la butée 16.

Le piston principal 3 s'ouvre seulement lorsqu'on est à une pression d'ouverture prédéfinie. Celle-ci peut se régler par le rapport des surfaces actives hydrauliques du piston principal 3. Dans le cas de la soupape électromagnétique 1 de la figure 1, le siège 4 du piston principal 3 a un diamètre D1 plus petit que le diamètre D2 du guide 19 formé par le corps de soupape 2.

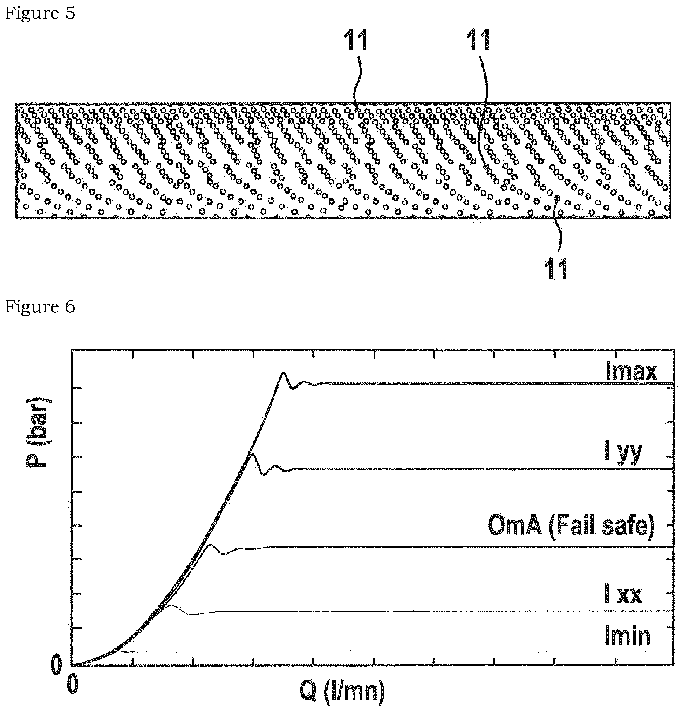

En variante de l'ouverture 11 du piston de commande 7 en forme de trou de serrure représenté aux figures 2-4 -comme par exemple, représenté à la figure 5-, on peut également avoir de nombreuses ouvertures 11 dans la paroi du piston de commande 7. A la figure 7, la multiplicité des ouvertures 11 est répartie en plusieurs rangées périphériques et le nombre des ouvertures 11 varie par rangée. Le nombre d'ouvertures 11 diminue vers le bas de sorte qu'en fonction de la position axiale du piston de commande 7, la section de l'ouverture varie qui, dans ce cas est la somme des sections des ouvertures 1 libérées.

Le diagramme de la figure 6 explicite les avantages de l'invention ; les courbes représentées correspondent respectivement à la courbe de pression par rapport au débit. Celles-ci correspondent à un piston de commande 7 équilibré hydrauliquement de façon optimale (pas de variation de pression). D'autres avantages sont la simplicité et la sécurité du fonctionnement ainsi qu'une large plage d'applications.

## Revendications

1. Soupape électromagnétique (1) pour réguler un dispositif amortisseur semi-actif de véhicule comprenant :
- un corps de soupape (2),
- un piston principal (3) mobile en translation logé dans le corps de soupape (2), poussé en direction d'un siège (4) par la force d'un ressort (5) et traversé par un perçage (6),
- un piston de commande (47) logé de manière mobile en translation dans le corps de soupape (2), entouré au moins par segment par une douille de guidage (8) et sollicité par la force d'un ressort de commande (9) ainsi que,
- un électroaimant (10) pour agir sur le piston de commande (7),
* le piston de commande (7) ayant au moins par segments une forme de cylindre creux et sa paroi a au moins une ouverture (11) qui, en fonction de la position axiale du piston de commande (7) est mise en chevauchement avec une rainure périphérique (12) de la douille de guidage (8) et,
* la rainure périphérique (12) de la douille de guidage (8) est reliée à une chambre de pression (14) par au moins un perçage (13) dans la douille de guidage (8), cette chambre étant en aval du perçage (6) réalisé dans le piston principal (3).

2. Soupape électromagnétique (1) selon la revendication 1,
**caractérisée en ce que**
la section d'au moins une ouverture (11) réalisée dans la paroi du piston de commande (7) varie en fonction de la position axiale du piston de commande (7).

3. Soupape électromagnétique (1) selon la revendication 1 ou 2, **caractérisée en ce que**
au moins une ouverture (11) réalisée dans la paroi du piston de commande (7) a une section pratiquement circulaire, élargie par une fente (15) s'étendant dans la direction axiale et de préférence dans la direction du piston principal (3).

4. Soupape électromagnétique (1) selon la revendication 1 ou 2, **caractérisée en ce que**
dans sa paroi le piston de commande (7) présente plusieurs orifices (11) dans plusieurs rangées périphériques, de préférence le nombre des orifices (11) variant par rangée, et en outre, de façon préférentielle, le nombre des orifices (11) par rangée diminue dans la direction du piston principal (3).

5. Soupape électromagnétique (1) selon l'une des revendications précédentes,
**caractérisée en ce que**
la force du ressort de commande (9) s'oppose à la force magnétique développée par l'électroaimant (10) et sollicite le piston de commande (7) en direction d'une butée (16) qui définit la position de fin de course du piston de commande (7), et dans cette position de fin de course, au moins un orifice (11) ou au moins une zone partielle d'un orifice (11) reste ouverte.

6. Soupape électromagnétique (1) selon l'une des revendications précédentes,
**caractérisée en ce que**
le piston de commande (7) est sollicité indirectement par un organe d'appui (17) et un autre ressort (18) par la force du ressort de commande (9) et, de préférence, l'organe d'appui (17) est logé coulissant dans le piston de commande (7) et s'appuie contre le piston de commande (7) par le ressort (18).

7. Soupape électromagnétique (1) selon l'une des revendications précédentes,
**caractérisée en ce que**
le siège (4) du piston principal (3) a un diamètre (D₁) inférieur au diamètre (D₂) d'un guide (19) du piston principal (3), réalisé dans le corps de soupape (2).

8. Dispositif amortisseur semi-actif de véhicule comprenant une soupape électromagnétique (1) selon l'une des revendications précédentes, la soupape électromagnétique (1) est à l'extérieur du dispositif amortisseur.

9. Procédé de régulation d'un dispositif amortisseur semi-actif d'un véhicule avec une soupape électromagnétique (1) selon l'une des revendications 1 à 7, la soupape électromagnétique (1) s'ouvrant sur plusieurs niveaux.
